# EUROPEAN PATENT APPLICATION

(11) **EP 0 709 158 A1**
(43) Date of publication of application: **01.05.1996**
(21) Application number: 95307201.4
(22) Date of filing: 11.10.1995
(51) Int. Cl.: B23H 7/02, B23H 11/00, B23H 1/00

(54) **Electric discharge machine**

(30) Priority: 24.10.1994 JP 284409/94
(71) Applicant: FANUC LTD., Minamitsuru-gun, Yamanashi 401-05 (JP)
(72) Inventor: Kita, Yuki, Room 10-203, Fanuc Manshonharimomi, Yamanashi, 401-05 (JP); Ishihara, Mitsuyoshi, Fanuc Dai3virakaramatsu, Yamanashi, 401-05 (JP); Yoda, Shinji, Fanuc Dai3virakaramatsu, Yamanashi, 401-05 (JP)
(74) Representative: Billington, Lawrence Emlyn

(57) **Abstract**

An electric-discharge machine body (1) is shielded by a cover (7) to prevent an accident such as an electric shock which may occur when a person approaches the machine, and also to prevent an electromagnetic wave disturbance caused in a peripheral area by electromagnetic waves due to machining. Moreover, a ventilator (8) for ventilating the cover (7) is provided on the cover (7) to protect the cover (7) from heat and water vapor produced due to electric discharge machining, and assure the performance and the machining accuracy of the machine.

## Description

The present invention relates to an electric discharge machine.

When electric discharge machining using a high-voltage power supply is performed, the following problems may occur: an accident such as an electric shock which may occur when a person approaches a mechanical part, and radio interference caused in a peripheral area by electromagnetic waves due to machining.

According to the present invention there is provided an electric discharge machine comprising a cover for shielding the whole or part of the machine, and ventilation means for positively transferring and/or circulating air between the space shielded by the cover and the outside of the cover.

In embodiments of the present invention, the whole or main sections of an electric discharge machine is or are shielded with a cover in order for example to prevent a person from approaching or touching part of the machine. Moreover, deterioration of the machine performance or shortening of the service life of the machine, which may be caused by covering the machine with the result that heat is confined therein and water vapor accumulates, is prevented by providing a ventilation means on the cover.

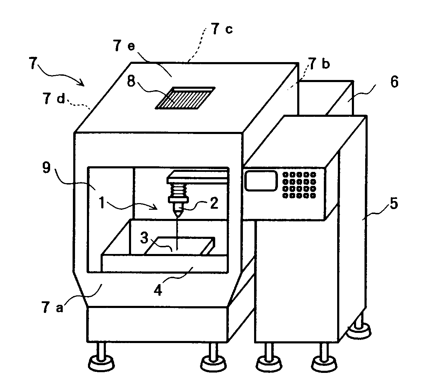

The invention will now be described by way of example and with reference to the accompanying drawing.

The drawing is a perspective view showing the wire electric discharge machine of an embodiment of the present invention.

The body 1 of the wire electric discharge machine is provided with a wire guide 2, a workpiece setting table 3, and a machining tank 4. The body 1 is arranged within a cover 7 together with an electric-discharge machining power supply (not shown). Reference numeral 5 represents a controller for controlling the machine body 1. Reference numeral 6 represents a working-fluid treatment system for purifying and circulating a working fluid to be supplied to the machining tank 4 and a jet nozzle of the machine body 1.

The cover 7 is formed like a housing so as to shield the machine body 1 with four outer panels 7a to 7d and a top panel 7e. A ventilator 8 serving as a ventilation means is provided on the top panel 7e where an opening section is formed. -The ventilator 8 is provided with air blowing means such as a fan.

It is also possible to manually turn on/off the ventilator 8 by providing a switch of the ventilator 8 on the panel 7a or the like, or turning on/off the ventilator 8 may be controlled by the controller 5 of the machine body 1 synchronously with execution/non-execution of electric discharge machining. It is possible to provide a ventilator such that a dustproof shutter is opened or closed by interlocking with on/off of air blowing. It is to be appreciated that this type of ventilator can be used as the ventilator 8 of this embodiment. In short, it is required that the cover 7 can be ventilated by the ventilator 8. Air may be supplied from the inside to the outside or from the outside to the inside of the cover 7. Ventilation of the cover 7 by the ventilator 8 may be achieved by forming a ventilating hole at an appropriate position of the cover 7 as shown, or alternatively (not shown) by making use of a mounting portion of the cover 7 such as a gap formed between the floor and the cover 7.

It is possible to provide a ventilator 8 on a panel other than the top panel 7e. However, when providing a ventilator 8 on any of the four outer panels 7a to 7d, it is necessary to arrange the ventilator 8 so that it is not closed or obstructed by a wall or other equipment, by taking into consideration the locations of the controller 5 and the working fluid treatment system 6 or the location of the machine body 1.

The panels 7a to 7e can be made of any material which can prevent an outsider from approaching. Moreover, for positively preventing radio disturbance, it is necessary to use a material with a high electromagnetic-wave cutoff effect in view of the quality and thickness of the material. Moreover, there is a method of forming a Faraday cage (Faraday shield) with the cover 7 itself by arranging a plurality of lead wires in parallel or like a net on the panels 7a to 7e.

Part of the panel 7a located at the front of the cover 7 has a rectangular opening, where a transparent inspection window made of acrylic or tempered glass is fixed so that the progress of machining can be confirmed from outside. The inspection window 9 or the panel 7a can be opened to simplify the operation for setting a workpiece to the workpiece setting table 3.

According to the above structure, heat and water vapor produced during electric discharge machining are exhausted to the outside by operating the ventilator 8 while electric discharge machining is executed using the machine body 1 or at every predetermined cycle during electric discharge machining, to ventilate the cover 7. Because thermal expansion of each section of the machine body 1 is restrained, it is possible to maintain a high machining accuracy, the machine body 1 is prevented from rusting due to moisture, and the machine body 1 and circuits of the electric-discharge power supply are prevented from damage due to moisture and heat. Moreover, because electromagnetic waves generated by a wire or a workpiece to be machined are cut off or attenuated by the cover 7, radio disturbance in the peripheral area can be suppressed.

Though a wire electric-discharge machine is shown above as an embodiment, the same construction may be applied to a diesinking electric-discharge machine, or other types of electric-discharge machine. Moreover, it is not always necessary to entirely shield the machine body 1 with the cover 7. In the case of an electric discharge machine the electric discharge machining sections of the machine such as the wire guide 2, workpiece setting table 3, machining tank 4, and wires can be shielded independently from the remainder of the machine body 1. In this case only the wire guide 2, workpiece setting table 3, machining tank 4, and wires, need be covered by a common single cover 7 provided with a ventilator 8.

In the illustrated embodiment the circulation of air between the space shielded by the cover 7 and the outside of the cover 7, by means of the ventilator 8, may be promoted by providing an additional ventilating hole at an appropriate position in the cover 7, or by making use of the mounting portion of the cover 7 such as a gap formed between the floor and the cover 7.

## Claims

1. An electric discharge machine comprising:
a cover for shielding the whole or part of the machine; and
ventilation means for positively transferring and/or circulating air between the space shielded by the cover and the outside of the cover.

2. An electric discharge machine according to claim 1, wherein the cover is such as to prevent a person from approaching or touching the machine.

3. An electric discharge machine according to claim 1 or 2, wherein the cover is such as to have an electromagnetic wave cutoff effect and shield a region in which electromagnetic waves are generated due to electric discharge machining.

4. An electric discharge machine according to any preceding claim, wherein the cover comprises a side panel and a top panel and the ventilation means is operative at an opening formed on the top panel or side panel.

5. An electric discharge machine according to any preceding claim, wherein part of the cover is made of a transparent member providing an inspection window through which the inside of the cover can be seen from the outside of the cover.

6. An electric discharge machine according to any preceding claim, wherein a manual switch for turning on/off the ventilation means is provided on the cover.

7. The electric discharge machine according to any preceding claim, wherein the ventilation means can be turned on/off in accordance with a command signal outputted from a controller for controlling operations of the electric discharge machine.
